# EUROPÄISCHE PATENTANMELDUNG

(11) **EP 1 253 699 A2**
(43) Veröffentlichungstag der Anmeldung: **30.10.2002**
(21) Anmeldenummer: 02009070.0
(22) Anmeldetag: 23.04.2002
(51) Int. Cl.: H02J 13/00

(54) **Verfahren zum Überwachen von Energieversorgungsnetzen**

(30) Priorität: 26.04.2001 DE 10120515
(71) Anmelder: SIEMENS AKTIENGESELLSCHAFT, 80333 München (DE)
(72) Erfinder: Siebert, Harry, 82178 Puchheim (DE)

(57) **Zusammenfassung**

Übertragungsprozeduren von Übertragungseinrichtungen (PNU,-PNC) sind für die Übertragung von Informationen über zumindest einen Teil (P1..Pn) eines Energieversorgungsnetzes (EVN) derart ausgestaltet, dass die Übertragungseinrichtungen (PNU,PNC) zumindest mit einer der Übertragungseinrichtungen (PNU,PNC) ständigen Kontakt halten und aus den Ergebnissen der ständigen Kontakte der Betriebszustand des zumindest einen Teils (P1..Pn) des Energieversorgungsnetzes (EVN) abgeleitet wird. Der automatisch ermittelte Betriebszustand wird einer Überwachungszentrale (CS) gemeldet, von der bei gestörten Energieversorgungsnetzen (EVN) eine Entstörung eingeleitet werden kann.

## Beschreibung

In Energieversorgungsnetzen, insbesondere Niederspannungs-Energieversorgungsnetzen, soll der Ausfall von kleineren oder größeren Bereichen bzw. Teilen dem Betreiber der Energieversorgungsnetze möglichst in kurzer Zeit mitgeteilt werden, um die Ausfallzeiten von angeschlossenen Kühl-, Heiz- und Telekommunikationseinrichtungen zu minimieren. Diese Störfälle wurden und werden Betreibern meist per Telefon mitgeteilt, da die bisherigen Telefone durch die Fernversorgung mit Energie durch die nächste Vermittlung von einem Energieausfall nicht betroffen sind und eine Informationsübermittlung gewährleisten. In zunehmendem Masse werden anstelle der herkömmlichen, fernversorgten Telefone ISDN-Telefone und Internet-Telefone eingesetzt, die am Ort ihres Einsatzes, d.h. beim Teilnehmer des Kommunikationsnetzes mit Energie versorgt werden. Zwar ist in ISDN-Einfachendgeraeten bei Ausfall des Energieversorgungsnetzes eine Notfunktion realisiert, jedoch ist diese nicht bei allen ISDN-Telefonen und keinesfalls bei Internet-Telefonen gewährleistet. Dies bedeutet, dass grundsätzlich eine Information über den Ausfall eines Energieversorgungsnetzes per Telefon nicht mehr möglich ist.

Eine Alternative, den Betreiber eines Energieversorgungsnetzes über einen Ausfall eines Bereichs bzw. Teils des Energieversorgungsnetzes zu informieren besteht in einer Informationsübermittlung über ein Mobiltelefon. Sowohl bei einer Information über ein drahtgebundenes als auch ein mobiles Telefon über einen Ausfall eines Bereichs bzw. Teils eines Energieversorgungsnetzes besteht keine systemimmanente Erkennung eines Ausfalls, sondern man ist auf eine Information der Teilnehmer dieser Kommunikationsnetze angewiesen.

Die der Erfindung zugrundeliegende Aufgabe besteht darin, die Erkennung von Ausfällen von Bereichen bzw. von Teilen von Energieversorgungsnetzen zu verbessern. Die Aufgabe wird durch die Merkmale des Anspruchs 1 gelöst.

Ein wesentlicher Aspekt des erfindungsgemäßen Verfahrens ist in der Ausgestaltung der Übertragungsprozedur von Übertragungseinrichtungen - in der Fachwelt auch als Power Line Modems bekannt - für die Übertragung von Information über Energieversorgungsleitungen derart zu sehen, dass die Übertragungseinrichtungen zumindest mit einer der Übertragungseinrichtungen UE ständigen Kontakt halten und aus den Ergebnissen der ständigen Kontakte der Betriebszustand des zumindest einen Teils (P1..)Pn) des Energiversorgungsnetzes (EVN) abgeleitet wird. Ein wesentlicher Vorteil des erfindungsgemäßen Verfahrens ist in der Mitbenutzung der Übertragungsprozedur für die Übertragung von Informationen über Energieversorgungsnetze zu sehen, wobei der Betriebszustand des zumindest einen Bereichs bzw. einen Teils des Energieversorgungsnetzes automatisch festgestellt wird.

Vorteilhaft wird von der zumindest einen Übertragungseinrichtung eine Überwachungseinrichtung des Energieversorgungsnetzes über den Betriebszustand des zumindest einen Teils des Energieversorgungsnetzes informiert - Anspruch 6 - oder von der zumindest einen Übertragungseinrichtung eine Kommunikationseinrichtung eines weiteren Kommunikationsnetzes über den Betriebszustand des zumindest einen Teils des Energieversorgungsnetzes informiert und von der Kommunikationseinrichtung eine Überwachungseinrichtung des Energieversorgungsnetzes informiert - Anspruch 8. Durch das automatische Weiterleiten der Information über den Betriebszustand zumindest eines Teils eines Energieversorgungsnetzes können Störungen bzw. Ausfälle in kürzester Zeit erfasst und eine Entstörung eingeleitet wird. Durch die Mitverwendung vorhandener und ggfs. mit geringem Aufwand zu implementierender Änderungen von Prozeduren in den Power Line Modems für die Übertragung von Informationen über Energieversorgungsnetze ist eine automatische Erkennung von Betriebszuständen von Energieversorgungsnetzen mit geringstem Aufwand möglich.

Nach einer weiteren vorteilhaften Ausgestaltung des erfindungsgemäßen Verfahrens wird eine Überwachungseinrichtung nur bei einem Ausfall oder einer Störung zumindest eines Teils eines Energieversorgungsnetzes (EVN) anzeigenden Betriebszustand informiert - Anspruch 11. Hierdurch werden die für eine Übermittlung vorgesehenen weiteren Kommunikationsnetze sowie die Power-Line-Modems, insbesondere das zentrale Power-Line-Modem und eine Überwachungszentrale dynamisch entlastet.

Weitere vorteilhafte Ausgestaltungen des erfindungsgemäßen Verfahrens sind den weiteren Ansprüchen zu entnehmen.

Im folgenden wird die das erfindungsgemäße Verfahren anhand einer Zeichnung näher erläutert.

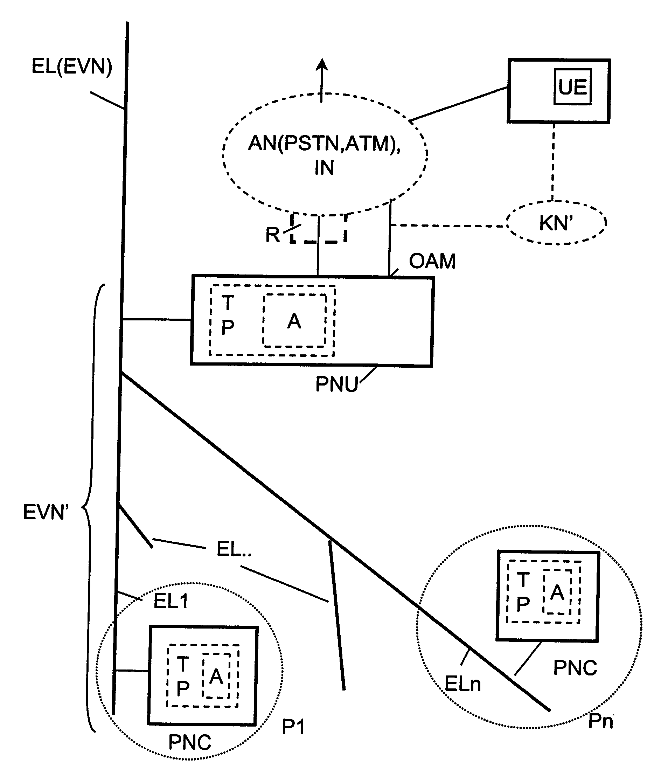

Die Figur zeigt einen Teil eines Energieversorgungsnetzes EVN', der durch Energieversorgungsleitungen EL gebildet ist. Hierbei sind an eine Energieversorgungsleitung EL mehrere, einer Baumstruktur folgend, Energieversorgungsleitungen EL1..Eln angeschlossen. Die Energieversorgungsleitungen EL1.. ELn enden in unterschiedlichen geographischen Bereichen P1..Pn, d.h. werden in die dort vorhandenen Gebäuden B im Sinne einer Energieversorgung dieser Gebäude B geführt - in der Zeichnung durch mit P1(B), Pn(B) bezeichnete, punktierte Kreise angedeutet. Dieser Teil des Energieversorgungsnetzes EVN' ist meist - auch im Ausführungsbeispiel - im Niederspannungsbereich eines Energieversorgungsnetzes EVN angeordnet.

Für diesen Niederspannungsbereich ist der Einsatz von Übertragungseinrichtungen vorgesehen - in der Fachwelt auch als Power-Line-Modems-bekannt, mit deren Hilfe Informationen, insbesondere Daten, über Energieversorgungsleitungen EL übertragen werden können. Hierbei ist ein zentrales Power-Line-Modem PNU vorgesehen, das mit mehreren dezentralen Power-Line-Modems PNC kommuniziert. Das zentrale Power-Line-Modem PNU ist an zentralerer Stelle, d.h. im Ausführungsbeispiel an die Energieversorgungsleitung EL angeschlossen. Die dezentralen Power-Line-Modems PNC sind in den lokalen Bereichen P1..Pn, d.h. in den jeweiligen Gebäuden B, mit den Energieversorgungsleitungen EL' verbunden. Die Verbindung erfolgt in den jeweiligen Gebäuden üblicherweise durch eine spezielle Koppelvorrichtung - nicht dargestellt - vor den Sicherungseinrichtungen bzw. Sicherungen. An weiteren, nicht dargestellten Energieversorgungsleitungen in weiteren Bereichen des Energieversorgungsnetzes EVN können weitere zentrale und mit diesen kommunizierende Power-Line-Modems eingesetzt werden, über die zusammen über einen überwiegenden Teil eines Energieversorgungsnetzes EVN Informationen bzw. Daten übertragen werden.

Die Übertragung von Information bzw. Daten und insbesondere der Kommunikationsaustausch wird mit Hilfe von Übertragungsprozeduren - in der Zeichnung in den Power-Line-Modem PNU, PNC durch ein mit TP bezeichnetes, strichliertes Rechteck angedeutet - durchgeführt. Diese steuern neben den eigentlichen Übertragungsverfahren einen Halbduplexbetrieb, der aufgrund der Baumstruktur des Energieversorgungsnetzes EVN bei der Informationsübertragung vorzusehen ist. Erfindungsgemäß sind diese Übertragungsprozeduren TP derart ausgestaltet, dass mit deren Hilfe die Verfügbarkeit bzw. das Vorhandensein von Power-Line-Modems PNU,PNC auch bei keiner aktuellen Übertragung von Informationen festgestellt wird, wobei die Verfügbarkeit bei einer aktuellen Übertragung ständig festgestellt werden kann. Werden aktuell keine Informationen bzw. Daten übertragen, so halten die dezentralen Power-Line-Modems PNC ständig Kontakt mit ihrem zugeordneten, zentralen Power-Line-Modem PNU. Hierzu sendet das zentrale Power-Line-Modem PNU regelmäßig Informationen an die dezentralen Power-Line-Modems PNC, die diese regelmäßig beantworten. Die hierzu erforderlichen Informationen bzw. Daten werden entweder als Nutzinformation oder auch als Authentifizierungsinformation im Rahmen einer Authentifizierungsprozedur A bzw. Verfügbarkeitsroutine A-in der Zeichnung durch ein mit A bezeichnetes Rechteck angedeutet - übermittelt, die Teil der Übertragungsprozedur TP ist. Dies bedeutet, dass das zentrale Power-Line-Modem PNU ständig über die Verfügbarkeit der dezentralen Power-Linse-Modems PNC und damit erfindungsgemäß über die dazwischenliegenden Bereiche des Energieversorgungsnetzes EVN bzw. der Energieversorgungsleitungen EL und damit über den Betriebszustand der jeweiligen Bereiche EVN' des Energieversorgungsnetzes EVN informiert ist. Dieses Wissen über den Betriebszustand von Teilen EVN' von Energieversorgungsnetzen EVN wird erfindungsgemäß an Überwachungseinrichtungen UE der Betreiber der Energieversorgungsnetze EVN übermittelt, wobei im Ausführungsbeispiel diese Überwachungseinrichtung UE Teil einer Überwachungszentrale CS ist.

Für die Übertragung des Wissens über den Betriebszustand der Teile EVN' der jeweiligen Energieversorgungsnetze EVN ist eine im zentralen Power-Line-Modem PNU gebildete Betriebszustands-Information bi vorgesehen. Diese Betriebszustands-Information bi wird aus den Antworten im Rahmen der Verfügbarkeitsroutine A bzw. Authentisierungsprozedur A abgeleitet. Alternativ können die Antworten direkt zumindest teilweise als Betriebszustands-Information bi verwendet werden. Die Übertragung der Betriebszustands-Information bi an die Überwachungszentrale CS kann über unterschiedliche Übertragungswege erfolgen. Als erste Variante ist die Übertragung über dasjenige Kommunikationsnetz KN möglich, an das das zentrale Power-Line-Modem PNC für die Übertragung von Information bzw. Daten angeschlossen ist. Dies ist entweder ein Zubringernetz AN des Internet IN - beispielsweise das Fernsprechnetz PSTN oder ein ATM-Netz - oder das Internet IN selbst - in der Zeichnung durch ein mit AN(PSTN,ATM),IN bezeichnetes, strichpunktiertes Oval angedeutet. Hierbei ist ein Ausgang OAM-insbesondere ein bereits vorhandener Ausgang zum Anschluss von Wartungs- oder Betriebseinrichtungen - mit dem Zubringernetz AN bzw. Internet IN zu verbinden, wobei der Ausgang OAM mit der entsprechenden Schnittstelle einschließlich einer geeigneten Netzsignalisierung und einem Übertragungsverfahren zu ergänzen ist.

Eine weitere Möglichkeit - in der Zeichnung durch strichlierte Linien angedeutet - der Übertragung besteht darin, die Betriebszustands-Information bi über ein weiteres Kommunikationsnetz KN' - in der Zeichnung durch ein mit KN' bezeichnetes, strichpunktiertes Oval angedeutet - zu übertragen, wobei dieses beispielsweise ein Fernsprechnetz oder ein Datennetz sowie ein ATM-Netz sein kann. In der Überwachungszentrale CS bzw. in der Überwachungseinrichtung UE wird die Betriebszustands-Information bi in einer hierfür geeigneten Überwachungseinrichtung visualisiert und/oder optisch angezeigt.

Alternativ wird die Betriebszustands-Information bi nicht direkt von dem zentralen Power-Line-Modem PNC an die Überwachungszentrale CS, sondern an eine erste in dem angeschlossenen Kommunikationsnetz AN/IN angeordnete Zugangseinrichtung-in der Zeichnung durch ein strichliertes Rechteck dargestellt - im Rahmen der eingesetzten Signalisierung übermittelt. Diese Zugangseinrichtung ist üblicherweise eine Zugangseinrichtung mit Routingfunktion und ist daher in der Figur als Router R bezeichnet. In einem Internet IN stellt dieser Router R ein Internet-Router und in einem Zugangsnetz eine den Verkehr konzentrierende Einrichtung mit Routerfunktionen dar. In dem Router R wird mit Hilfe seiner Routingfunktion die Betriebszustands-Information bi im Rahmen der eingesetzten Signalisierung - beispielsweise Internet, ATM-Netz oder Fernsprechnetz - oder in einem Nutzkanal des jeweiligen Kommunikationsnetzes AN/IN an die Überwachungszentrale CS übermittelt.

Vorteilhaft wird eine Betriebszustands-Information bi nur im Störungsfall, d.h. bei Ausfall des jeweiligen Teils EVN' des Energieversorgungsnetzes EVN, an die Überwachungszentrale CS übertragen, wodurch die dynamische Belastung des zentralen Power-Line-Modems PNU und die zusätzliche Belastung der für die Übertragung vorgesehenen Kommunikationsnetze KN,KN' gering bleibt. Ist in der Überwachungszentrale CS vorteilhaft die Topologie bzw. die Netzkonfiguration der eingesetzten Power-Line-Modems PNU,PNC gespeichert, kann bei Eintreffen einer die nicht Verfügbarkeit von zentralen und dezentralen Power-Line-Modems PNU,PNC anzeigende Betriebszustands-Informationen bi der ausgefallene Bereich bzw. die ausgefallenen Teile EVN' des Energieversorgungsnetzes EVN identifiziert werden. Hierdurch können Störungen bzw. Ausfälle von Teilen EVN' oder auch größeren Bereichen - bei Übertragung mehrerer Betriebszustands-Informationen bi von mehreren zentralen Power-Line-Modems PNU - nach einer visuellen und/oder optischen Anzeige der Betriebszustands-Information bi in kürzester Zeit automatisch erfasst und gemeldet werden. Durch die umgehende Meldung der Störungen bzw. Ausfälle kann in kürzester Zeit eine Entstörung, d.h. eine Fehleranalyse, Fehlerbehebung und eine Wiederinbetriebnahme der jeweiligen Teile EVN' bzw. Bereiche der Energieversorgungsnetze EVN eingeleitet und durchgeführt werden, wobei die übermittelten Betriebszustands-Informationen bi vorteilhaft in die Fehleranalyse bzw. Fehlerlokalisierung einbezogen werden können.

## Patentansprüche

1. Verfahren zum Feststellen des Betriebszustands von zumindest von Teilen (EVN') von Energieversorgungsnetzen (EVN), bei dem Übertragungsprozeduren (TP) von Übertragungseinrichtungen (PNU,PNC) für die Übertragung von Information über zumindest einen Teil (EVN') eines Energieversorgungsnetzes (EVN) derart ausgestaltet sind, dass die Übertragungseinrichtungen (PNU,PNC) zumindest mit einer der Übertragungseinrichtungen (PNU,PNC) ständigen Kontakt halten, und
bei dem aus den Ergebnissen der ständigen Kontakte der Betriebszustand des zumindest einen Teils (EVN') des Energieversorgungsnetzes (EVN) abgeleitet wird.

2. Verfahren nach Anspruch 1,
**dadurch gekennzeichnet,**
**dass** eine der Übertragungseinrichtungen (PNU,PNC) durch eine zentrale Übertragungseinrichtung (PNU) realisiert ist, wobei der zentralen Übertragungseinrichtung (PNU) die weiteren Übertragungseinrichtungen (PNU,PNC) als dezentrale Übertragungseinrichtungen (PNC) zugeordnet sind,
**dass** die zentrale Übertragungseinrichtung (PNU) regelmäßig überprüft, ob die dezentralen Übertragungseinrichtungen (PNC) noch erreichbar sind, und
**dass** von der Erreichbarkeit der dezentralen Übertragungseinrichtungen (PNC) der Betriebszustand des zumindest einen Teils (P1..Pn) des Energieversorgungsnetzes (EVN) abgeleitet wird.

3. Verfahren nach Anspruch 1 oder 2,
**dadurch gekennzeichnet,**
**dass** der ständige Kontakt der Übertragungseinrichtungen (PNU,PNC) zu zumindest einer Übertragungseinrichtung (PNU) im Rahmen einer Signalisierungsprozedur oder mit Hilfe Nutzinformationsübertragungsprozedur der Übertragungsprozedur (TP) gehalten wird.

4. Verfahren nach Anspruch 2 oder 3,
**dadurch gekennzeichnet,**
**dass** die Erreichbarkeit durch regelmäßigen Austausch von Authentisierungsinformation zwischen der zentralen und den dezentralen Übertragungseinrichtungen (PNU,PNC) erreicht wird,
wobei eine Authentisierungsanfrage gezielt an eine dezentrale Übertragungseinrichtung (PNC) übermittelt und von dieser bei störungsfreier Übermittlung gezielt durch eine die jeweilige Übertragungseinrichtung (PNU) identifizierende Authentisierungsantwort beantwortet wird.

5. Verfahren nach Anspruch 2 oder 3,
**dadurch gekennzeichnet,**
**dass** Erreichbarkeit durch regelmäßigen Informationsaustausch zwischen der zentralen und den dezentralen Übertragungseinrichtungen (PNU,PNC) erreicht wird,
wobei die Information als Nutzinformation gezielt an eine dezentrale Übertragungseinrichtung (PNC) übermittelt und von dieser bei störungsfreier Übermittlung gezielt durch eine die jeweilige Übertragungseinrichtung (PNC) identifizierende Information als Nutzinformation beantwortet wird.

6. Verfahren nach einem der vorhergehenden Ansprüche,
**dadurch gekennzeichnet,**
**dass** von der zumindest einen Übertragungseinrichtung (PNU) eine Überwachungseinrichtung (CS) des Energieversorgungsnetzes (EVN) über den Betriebszustand des zumindest einen Teils (EVN') des Energieversorgungsnetzes (EVN) informiert wird.

7. Verfahren nach Anspruch 6,
**dadurch gekennzeichnet,**
**dass** ein Anschluss (AOM) der zumindest einen Übertragungseinrichtung (PNU) mit einem Kommunikationsnetz (AN,IN) verbunden und derart ausgestaltet ist, das über das Kommunikationsnetz (AN,IN) der Betriebszustand des zumindest einen Teils (EVN') des Energieversorgungsnetzes EVN die Überwachungszentrale (CS) informiert wird.

8. Verfahren nach den vorhergehenden Ansprüchen,
**dadurch gekennzeichnet,**
**dass** von der zumindest einen Übertragungseinrichtung (PNU) eine Kommunikationseinrichtung (R) eines Kommunikationsnetzes (AN,IN) über den Betriebszustand des zumindest einen Teils (EVN') des Energieversorgungsnetzes (EVN) informiert und von der Kommunikationseinrichtung (R) eine Überwachungseinrichtung (UE) des Energieversorgungsnetzes (EVN) informiert wird.

9. Verfahren nach Anspruch 8,
**dadurch gekennzeichnet,**
**dass** die Kommunikationseinrichtung (R) des Kommunikationsnetzes durch einen Router (R) mit Routingfunktionen eines paketorientierten Kommunikationsnetzes realisiert ist, wobei mit Hilfe der Routingfunktion der Betriebszustand an die Überwachungseinrichtung (CS) vermittelt wird.

10. Verfahren nach einem der Ansprüche 2 bis 9,
**dadurch gekennzeichnet,**
**dass** der Betriebszustand des zumindest einen Teils (EVN') des Energieversorgungsnetzes (EVN) durch eine Betriebszustands-Information (bi) repräsentiert ist.

11. Verfahren nach einem der Ansprüche 6 bis 10,
**dadurch gekennzeichnet,**
**dass** eine Überwachungseinrichtung (UE) nur bei einem Ausfall oder einer Störung zumindest einen Teil (P1..Pn) eines Energieversorgungsnetzes (EVN) anzeigenden Betriebszustand informiert wird.
